# EUROPEAN PATENT SPECIFICATION

(11) **EP 2 667 701 B1**
(45) Date of publication and mention of the grant of the patent: **11.03.2015**
(21) Application number: 12739333.8
(22) Date of filing: 26.01.2012
(51) Int. Cl.: A01G 13/00

(54) **GROUND-COVER MULCH AND METHOD FOR MANUFACTURING IT**
BODENBELAGSMULCH UND VERFAHREN ZU SEINER HERSTELLUNG
PAILLIS COUVRE-SOL ET SON PROCÉDÉ DE FABRICATION

(30) Priority: 26.01.2011 FI 20115078
(43) Date of publication of application: 04.12.2013
(73) Proprietor: Stora Enso Oyj, 00101 Helsinki (FI)
(72) Inventor: TIILIKKALA, Kari, FI-31610 Vaulammi (FI); TAHVONEN, Risto, FI-21500 Piikkiö (FI)
(74) Representative: Helke, Kimmo Kalervo
(86) International application number: PCT/FI2012/050072
(87) International publication number: WO 2012/101329

(56) References cited:
- JP-A- 11 187 774
- US-A- 4 788 790
- US-A1- 2004 035 048
- US-A1- 2004 187 381
- DATABASE WPI Week 200873 Thomson Scientific, London, GB; AN 2008-M46984 XP002691507, & KR 2008 0044216 A (CHANG J W) 20 May 2008 (2008-05-20) cited in the application & KR 2008 0044216 A (WOO CHANG JUNG [KR]) 20 May 2008 (2008-05-20) cited in the application

## Description

The present invention relates to a ground-cover mulch, which includes a web-formed vegetable fibre-bearing pulp, and a wood distillate. In addition, the invention also relates to a method for manufacturing a ground-cover mulch.

According to one estimate, agriculture and the foodstuffs business uses 3.6 million tonnes of plastic, 40 % of which is used as mulch and in greenhouses. At the present moment, black plastic is the mulch most used, but biodegradable films and paper mulches are also known. In China alone, more than 100 000 hectares are covered with plastic and the need for mulches is growing rapidly, as is the need for replacements for existing mulches. In 1999, the cultivated surface area covered with plastic was already more than 12 million hectares and the amount has increased and continues to increase.

On global markets, much effort is being put into developing biodegradable mulches, because the increasing demands for foodstuffs cannot be met without substrate cover and effective weed control. The need to reduce artificial fertilizer use also demands mulch materials, which improve moisture retention in the ground and the action of nutrient-releasing microbes. The diminishing water reserves available for irrigation and the evaporation of water increase the demand for surface mulches, especially in areas of cultivation with dense populations and areas suffering from drought.

The use of known plastic mulches causes environmental problems and cost pressures. The price of black plastic rises in step with increases in the price of oil, accompanied by the increase in the cost of labour used to remove and dispose of the plastic. It is also desired to stop the environmental detriments caused by plastic. Plastic buried in the ground remains there for years and both hinders cultivation and disfigures the landscape. Plastic used as a mulch also prevents rainwater from being absorbed by the roots of plants and restricts microbial activity on the surface of the ground. In organic agriculture, the use of a mulch based on fossil oil seriously detracts from the sector's image.

Up until now, commercial paper mulches have been mainly used only by subsistence farmers, because the durability of paper without protective treatment is poor. Weeds germinate on the surface of the paper and/or rapidly penetrate the water-logged and softening paper. A solution is known from Korean patent application KR20080044216 A, in which a ground-cover mulch is manufactured from, for example, a paper-fibre pulp and a wood distillate. Another corresponding one is disclosed in publication JP11187774 A.

However, several significant and still unresolved drawbacks relate to mulches known from the prior art and treated with wood distillate. One of the first of these is the fact that they cannot prevent the germination of the seeds of weeds that drop on top of the mulch material. Once a seed has germinated on top of the mulch material, it also decomposes the mulch material and, before long, its roots pass through the mulch material and into the ground surface.

A second drawback is the decomposition of, and formation of holes in the mulch material during the growing season. Mulch paper will rapidly separate from the ground, if its edges have decomposed during the growing season. Decomposition of the edges is promoted, if the edges of the mulch are sunk into the substrate. Papers decomposed by decay agents do not prevent the growth of weeds, nor do they remain intact in moist ground, as the wind and the growth of weeds raise the edges of the decomposed papers off the ground.

Yet a third drawback relating to mulches known from the prior art is that their use cannot prevent the presence and egg-laying of organisms, such as, for example, snails, under the mulch. Some of the mulches known from the prior art may even attract snails to lay eggs in the moist ground layer under the waterproof mulch.

The present invention is intended to create a ground-cover mulch, which has improved properties compared to those of mulches according to the prior art. The characteristic features of the ground-cover mulch according to the invention are stated in Claim 1. In addition, the invention also relates to a method for manufacturing a ground-cover mulch, the characteristic features of which are stated in Claim 4.

The applicant has made the important observation that, by means of birch-wood distillate, the properties of a ground-cover mulch manufactured from a web-formed vegetable fibre-bearing pulp are improved substantially compared to known ground-cover mulches treated with wood distillate.

According to pilot-stage tests, by means of a ground-cover mulch treated with birch-wood distillate, it is possible to very effectively prevent the germination of weeds, for example, at the beginning of the growing season and, in addition, to also slow the premature tearing and decomposition of the mulch.

According to one embodiment, the mulch can be treated not only with birch-wood distillate, but also with a colouring agent, of which one example is biochar. Biochar increases the durability of the mulch, prevents light from penetrating through the mulch, and also increases the ground's long-term carbon reserves.

One important advantage of a mulch material treated with birch-wood distillate is that it prevents the germination of weed seeds that fall onto the surface of the mulch, so that they will not grow, as happens in, for example, untreated paper.

A second important advantage of a mulch material treated with birch-wood distillate is that it prevents the mulch from decomposing and forming holes during the growing season. This means that the mulch will survive in the ground for the entire growing season and not decompose prematurely, as may happen with mulches known from the prior art. In addition, the mulch will also not detach from the ground.

A third important advantage of a mulch material treated with birch-wood distillate is that it will effectively repel organisms, such as slugs and snails, that come under the mulch and also reduce their egg laying under the mulch.

A fourth important advantage of a mulch material treated with birch-wood distillate is that birch-wood distillate also increases the strength of the mulch material. The ground-cover mulch will then also better withstand mechanical spreading than, for example, known untreated papers.

Compared to mulches known from the prior art, several other significant advantages, which are listed in the following, are gained by using the mulch according to the invention, which contains birch-wood distillate
- the mulch is biodegradable, and does not leave waste on the field, as plastic does,
- the mulch will withstand mechanical spreading,
- the mulch need not be removed from the field after the growing season, so that the invention will save cultivation costs,
- the price of the mulch is not directly linked to the development of the price of fossil oil, as the price of, for example, plastic mulch is,
- the protection of the ground and the control of weeds based on using the mulch is not based on the use of fossil oil and is better suited than plastic to ecological production,
- substances originating from plants: wood fibres and protective substances as well as possible biochar are transferred to plant production and plant protection,
- biodegradable mulch can be used to replace the use of herbicides, which have created environmental detriments, especially in the cultivation of perennials,
- a mulch with a distillate content can be used to repel pests better than untreated paper or plastic,
- an ecologically safe mulch is more suitable for the protection of decorative plants surrounding playgrounds than the use of chemical herbicides that leave residues,
- the mulch allows rainwater to penetrate for use by roots better than, for example, plastic and does not form a protected place for ants as does, for example, plastic.

Other additional benefits achieved by means of the invention appear in the description portion and its characteristic features in the accompanying Claims.

The invention, which is not restricted to the embodiment presented in the following, is examined in greater detail with reference to the accompanying figures, in which
- Figure 1: shows an example of the mulch,
- Figure 2: shows an example of the application of the use of the mulch in bed cultivation, and
- Figure 3: shows a cross-section of the cultivation bed of Figure 2.

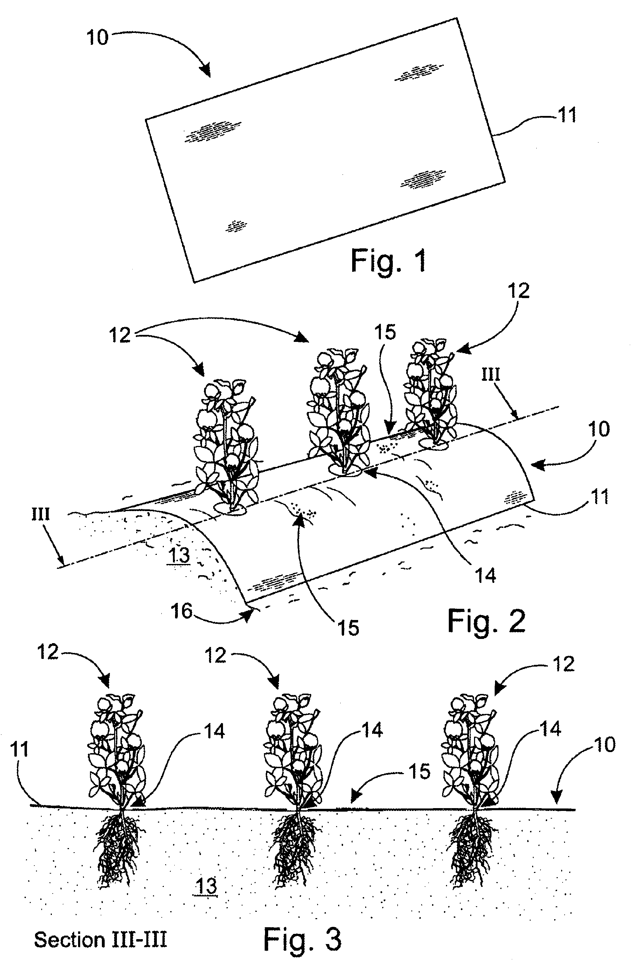

Figure 1 shows an example of the ground-cover mulch 10. The ground-cover mulch 10 includes a web-formed vegetable fibre-bearing pulp 11 and wood distillate. The mulch material 11 covering the ground surface is a vegetable fibre product, such as paper 11, board of a similar web-like processed product, manufactured from, for example, wood or plants (for example, flax). Thus, the web-like mulch material 11 can be manufactured using a paper or board machine, for example, in a manner that is, as such, known. The mulch material 11 can be manufactured from, for example, cellulose fibre, refiner groundwood, ground pulp, recycled fibre, or a combination of these. According to one embodiment, there can be a minium of 2/3 of mechanical pulp and a maximum of 1/3 cellulose in the fibre web 11. The mechanical pulp can be used to slow the decomposition of the mulch and the cellulose used to increase the strength required when spreading it.

Recycled fibre can be again web-formed from a pulped form, or it can be also collected directly from consumers, as a manufacturing material for the mulch material, either as such or after de-inking. According to one embodiment, rejects from the pulp and paper-manufacturing process, such as rejects products from the de-inking process (within the permitted limit values for detrimental substances) or, for example, reject pulp created during the manufacture of pulp, can be exploited in the mulch material. Further, according to one embodiment, the mulch material 11 can also be the reject edge band of a fibre web manufactured on a paper, board, or finishing machine, which would otherwise become reject, but can now be exploited as a mulch material, either again web-formed, or even as such as a material directly reeled from the machine.

The absorbability properties of a paper suitable for use as a mulch material can be selected in such a way that the paper can be treated with additives, which include at least one preservative based on a wood distillate, the effect of which is also retained in the paper. Thus, the paper can be to some extent bulky. In addition, the paper's properties, for example in relation to tensile and tearing strength, can be selected in such a way that the mulch manufactured from it will resemble black plastic to such an extent that the technology used to spread plastic films can be used to spread it, in other words, that the paper will withstand mechanical spreading, for example, for row-cultivation plants. This can be influenced by, for example, the amount of cellulose.

The properties of the mulch material have been improved by treating it with birch-wood distillate. The chemical composition of birch-wood distillate differs from that of, for example, distillates made from coniferous wood, in which the main components are rapidly evaporating resinous substances. Coniferous-wood distillates known from the prior art have been shown to have an advantageous effect in improving the properties of mulch materials, but, on the basis of the pilot-stage tests made by the applicant, birch-wood distillate has been demonstrated to achieve many different advantages relative to them. In other words, one aim of the invention is also the use of birch-wood distillate for the manufacture of a ground-cover mulch 10 and/or for maintaining its functionality in cultivation and also in a ground-cover material 11, or in the manufacture of a ground-cover material 11.

According to one embodiment, in the mulch it is possible to use a water-soluble pyrolysis liquid obtained by slow pyrolysis from birch wood, in which there are relatively many phenolic compounds, among others. Observations have been made in the pilot-stage tests that the phenols of birch wood prevent the activity of cellulose-decomposing microbes, which affect the durability in the ground of the mulch, and that the distillate acids (at least acetic acid) prevent the germinate of weeds. Liquids evaporating at a temperature of less than 400°C, for example, can be used as the distillate. Thus, the mulch can be manufactured entirely from substances produced by plants, making it is also highly suitable for organic cultivation, in which the use of plastic mulch is limited.

Further, the ground-cover mulch 10 can also include some suitable, for example organic, colouring additive, such as birch-wood distillate containing tar and/or biochar. These can be used to reduce significantly the paper's light transmission, thus preventing the germination of seeds and seedlings better than, for example, translucent paper. Biochar can be used in papers in which wood vinegar has been used. The paper can then be intended for use during only a single growing season. More specifically, the biochar used in the mulch can be, for example, fine-grained carbon manufactured from wood by pyrolysis distillation. The biochar used in the mulch material 11 also improves the cultivation-technical properties of the ground-cover mulch 10, such as the binding ability of the wood distillate. In addition, the carbon can also be used as a dark colour addition to the mulch, when the mulch will allow as little as less than 5 % of the light arriving at the surface of the ground to pass through it. The mulch containing biochar can also be combined to form part of carbon-neutral cultivation. The biochar turned into the ground will last for 300 - 3000 years. 1 kg of carbon corresponds to 3.7 kg CO² equivalent gas emissions.

In the following, an exemplary embodiment of a method for manufacturing mulch is described. In the method, the mulch material 11 is web-formed from a vegetable fibre-bearing pulp, and, when dried, forms the supporting and covering part of the ground-cover mulch 10. In addition, birch-wood distillate is included in one way or another in the finished ground-cover mulch 10.

According to one embodiment, the supporting mulch material 11 can be treated after manufacture by using birch-wood distillate. According to another embodiment, the birch-wood distillate, or at least part of it, can be mixed already with the pulp to be web-formed, or added to it only during the web formation, so that it is added throughout the mulch material. The mulch material 11 can be made in different widths, either by reeling it as a continuous web onto a roll, or in sheet form, of which an example is shown in Figure 1.

The birch-wood distillate content in the treating agent can be varied according to the application. It can be, for example, 10 - 100 %. The diluting liquid used can be, for example, water. It has been shown that a distillate content of even 10 % will improve the properties of the mulch material in weed control and in the durability of the mulch. In one pilot-stage test, the effect of the distillate was tested using two different liquids. These were the basic distillate that is obtained from pyrolysis and a basic distillate, to which 30-% water had been added. The water precipitates tar from the distillate, allowing the tar to be easily removed. The proportion of the tar was then reduced from 7 % to 1 %. By absorbing the birch pyrolysis compounds into a material 11 formed as a web, they are prevented from affecting the actual growing plants. For its part, this is also an important advantage, especially if direct contact with birch-wood distillate (for example by spraying) is detrimental to the plants.

Some possible forms of treatment of the mulch material after web formation are the spraying of birch-wood distillate onto the web, and roll-assisted transfer onto the web. By means of these forms of treatment, the amount of distillate being transferred to the web can be easily controlled. The advantages of a controlled transfer are the saving of distillate and being able at the same time to regulate whether the mulch will last for one or more growing seasons. Yet another possibility is to absorb the birch-wood distillate in the mulch material, for example, by impregnation. This can be implemented, for example, by immersing a continuous mulch-material web in a distillate bath. This will ensure that the distillate saturates the mulch material essentially completely. At the end of the treatment process, the mulch can be dried and possibly cut into dimensions suiting the application.

Biochar can also be added to the mulch 10 in its manufacturing stage, in several different ways. According to one embodiment, it can be added to the ground-cover mulch 10, for example, during the distillate treatment. It can then be brought to the surface of the mulch 10 as a fine-grained dust, for example, immediately after the distillate treatment before the distillate has dried. Once the distillate has dried, the biochar will also adhere to the surface of the paper. On the other hand, biochar can also be brought to the ground-cover mulch 10 mixed with the birch-wood distillate. This will ensure that it is brought to the entire area of the mulch and spreading will be more controlled in other ways too. Yet another possibility can be to mix biochar already with the pulp to be formed as a web.

In the manufacture of the mulch, for example the paper grade and amount, quality, and origin of the distillate can be used to regulate the time that the mulch will withstand the action of decomposing fungi, and thus perform its task as a ground-surface cover. This will make it possible to manufacture ground-cover-mulch products that last for a single growing season, or for a longer time. If necessary, distillate can even be added to a mulch on the surface of the ground, for example in the middle of the growing season, if there is a need to extend its duration.

According to pilot-stage tests made by the applicant, the amount of dry distillate in a one-year mulch 10 can be, for example, 2 - 40 g/m², and in two or more year mulches 10, for example, 10 - 100 g/m², depending on the base paper 11. The amounts given are the amounts remaining in the paper after the drying of the distillate. As a basis for the duration, the measurement results for the amount of light penetrating the mulch (maximum 0.3 micromol/square metre), the rate of decomposition in greenhouse tests (criteria: no holes and no detaching from the ground), the paper strength in laboratory tests (more than app. 50 % of the strength of plastic), and the germination of weeds on top of the mulch (less than 25 % of the seeds germinate in laboratory tests) were used. In the tests, the basic distillate and the basic distillate diluted with water, as referred to in the description above, were used. The tar content of the distillate may have some effect on the decomposition of the mulch, so that it may be of some benefit in improving the durability, particularly of mulches for more than one growing seasons.

The mulch can also be applied as a cultivation method, of which an exemplary embodiment is shown in Figures 2 and 3. In other words, one object of the invention is the use in cultivation of the ground-cover mulch 10 described as one embodiment above. First of all, the cultivation base 13 can be prepared for sowing, for example, by turning over the ground, after which the possible formation of beds is performed, and then sowing, for example, as seeds or seedlings. As a partial stage of one method, the surface of the cultivation base 13 is equipped with ground-cover mulch 10 described above, the supporting mulch material 11, being manufactured from a web-formed vegetable-fibre-bearing pulp, and in which there is also birch-wood distillate. The mulch 10 can be arranged on the surface of the cultivation base 13 when it is being made, during bed-forming or sowing, or only after bed-forming or sowing. In any event, an opening 14 for the plant 12 being cultivated exists in, or is made in the mulch 10 covering the surface of the ground. The mulch 10 can be spread using the same equipment as a plastic mulch, nor are new machine investments or other technical changes required in cultivation. Paper treated with birch-wood distillate is also advantageous in terms of spreading the mulch. In birch-wood distillate there are many decomposition products of wood lignin. The lignin binds the fibres in the mulch together, i.e. reinforces the mulch, as a result of which the toughness of the mulch material, which is required in mechanical spreading, is improved. Untreated paper withstands mechanical spreading poorly, unless special agents preventing tearing have been added to it.

The birch-wood distillate absorbed in the mulch also remains in the mulch material 11. In pilot-stage tests, the treatment of the mulch material with birch-wood distillate has also been observed to prevent exceptionally effectively the germination of weed seeds (reference number 15 in Figure 2) falling on the mulch and their growth, especially in the most critical stage requiring control (at the start of the growing season), without damaging the cultivation plants and endangering their development. On the other hand, the mulch treated with birch-wood distillate also prevents the growth of weeds that are already in the ground. Later, the distillate will protect the mulch paper from decomposing fungi during the growing season and thus also slow the decomposition of, and formation of holes in the paper, nor will the mulch tear too early, as will, for example, paper that is not protected by distillate.

On the basis of the applicant's pilot-stage tests, precisely substances obtained from birch-wood distillate appear to have a property, which especially effectively prevents the paper from decomposition and formation of holes during the growing season. Mulch paper 10 treated with birch-wood distillate remains in the ground, because its edges 16 (Figure 2) do not begin to decompose during the growing season, due to the birch-wood distillate treatment. As is known, if the edges 16 of the mulch 10 are sunk into the ground, they will then be particularly exposed to moisture and ground decomposition agents, which are then very liable to decompose the mulch. Thus, the poorly decomposing mulch effectively prevents the growth of weeds, because it remains intact in moist ground, nor will the wind and the prevented growth of weeds under the mulch be able to lift the edges of the paper away from their places. Thus, the control effect of the mulch against weeds will suffice for the entire growing season, unlike papers untreated with distillate or treated with other distillates, the decomposition of which may start already during the growing season. Detrimental substances do not dissolve from the vegetable-derived substances into the ground nor into water. In addition to row cultivation, the distillate paper mulch is eminently suitable for landscape development, in which the growth of weeds is prevented especially after the planting stage for the duration of the growing season.

During the growing season, the birch-wood distillate and energy of the paper stimulate the activity of microbes in the ground and accelerate the release of organic nutrients for the use of cultivated plants. The retention of water evaporated from the ground in the root area is part of the essential preconditions for growth, which the mulch improves better than, for example, plastic, which rejects rainwater. In addition, the biodegradable mulch passes water through it and does not prevent the breathing of the ground, unlike black plastic, which guides water outside the root system and does not permit the passage of air.

The plant-based substances used in the mulch material are biodegradable, i.e. they can be ploughed into the ground after the growing season, to form energy for decomposition agents. Ploughing will mix the paper treated with distillate completely with the ground, where it decomposes. Thus, the mulch can be ploughed into the ground after use, without environmental risks and additional costs. Being biodegradable, the mulch also does not substantially affect the mineral balance of the ground. In addition, the birch-wood distillate released through the decomposition of the mulch after the growing season is also suitable as energy for microbes and stimulates their activity.

## Claims

1. Ground-cover mulch, which includes a web-formed vegetable fibre-bearing pulp, and wood distillate, **characterized in that** the wood distillate includes birch-wood distillate.

2. Ground-cover mulch according to Claim 1, **characterized in that** the ground-cover mulch (10) includes, in addition, biochar.

3. Ground-cover mulch according to Claim 2, **characterized in that** the biochar is fine-grain carbon manufactured from wood by pyrolysis distillation.

4. Method for manufacturing ground-cover mulch, in which the said ground-cover mulch (10) is web-formed from a vegetable fibre-bearing pulp, in which there is, in addition, at least wood distillate, **characterized in that** the wood distillate is birch-wood distillate.

5. Method according to Claim 4, **characterized in that** the birch-wood distillate is transferred to the mulch material (11) by spraying.

6. Method according to Claim 4 or 5, **characterized in that** the birch-wood distillate is transferred to the mulch material (11) by roll transfer.

7. Method according to any of Claims 4 - 6, **characterized in that** the ground-cover mulch (10) is saturated with birch-wood distillate.

8. Method according to any of Claims 4 - 7, **characterized in that** biochar is added to the ground-cover mulch (10) in its manufacturing stage.

9. Method according to Claim 8, **characterized in that** the biochar is added to the ground-cover mulch (10) in connection with the wood-distillate treatment.

10. Method according to Claim 9, **characterized in that** the biochar is added to the ground-cover mulch (10) by dusting.

11. Method according to Claim 9 or 10, **characterized in that** the biochar is added to the ground-cover mulch (10) mixed with the birch-wood distillate.

12. Use of birch-wood distillate to manufacture a ground-cover mulch (10), and/or to maintain its operating condition during cultivation.

13. Use of birch-wood distillate in a ground-cover-mulch material (11), or in the manufacture of a ground-cover mulch material (11).

14. Use of a ground-cover mulch (10) according to any of Claims 1 - 3 in cultivation.

## Patentansprüche

1. Mulch zur Bodenbedeckung, der pflanzenfaserhaltigen Zellstoff in Bahnform sowie Holzdestillat enthält, **dadurch gekennzeichnet, dass** das Holzdestillat Birkenholzdestillat enthält.

2. Mulch zur Bodenbedeckung gemäß dem Patentanspruch 1, **dadurch gekennzeichnet, dass** der Mulch zur Bodenbedeckung (10) außerdem Biokohle enthält.

3. Mulch zur Bodenbedeckung gemäß dem Patentanspruch 2, **dadurch gekennzeichnet, dass** die Biokohle aus feinkörniger Kohle besteht, die aus Holz mit Hilfe der Pyrolyse-Destillation hergestellt wird.

4. Verfahren zur Herstellung von Mulch zur Bodenbedeckung, bei der der besagte Mulch zur Bodenbedeckung (10) eine Bahnform hat, die aus pflanzenfaserhaltigem Zellstoff besteht, der Mulch außerdem zumindest Holzdestillat enthält, **dadurch gekennzeichnet, dass** das Holzdestillat Birkenholzdestillat ist.

5. Verfahren gemäß dem Patentanspruch 4, **dadurch gekennzeichnet, dass** das Birkenholzdestillat durch Sprühen auf das Mulchmaterial (11) übertragen wird.

6. Verfahren gemäß dem Patentanspruch 4 oder 5, **dadurch gekennzeichnet, dass** das Birkenholzdestillat über eine Walze auf das Mulchmaterial (11) übertragen wird.

7. Verfahren gemäß einem der Patentansprüche 4 - 6, **dadurch gekennzeichnet, dass** der Mulch zur Bodenbedeckung (10) mit Birkenholzdestillat imprägniert wird.

8. Verfahren gemäß einem der Patentansprüche 4 - 7, **dadurch gekennzeichnet, dass** die Biokohle dem Mulch zur Bodenbedeckung (10) während seiner Herstellung hinzugefügt wird.

9. Verfahren gemäß dem Patentanspruch 8, **dadurch gekennzeichnet, dass** die Biokohle dem Mulch zur Bodenbedeckung (10) in Verbindung mit der Holzdestillatbehandlung hinzugefügt wird.

10. Verfahren gemäß dem Patentanspruch 9, **dadurch gekennzeichnet, dass** die Biokohle dem Mulch zur Bodenbedeckung (10) durch Einstäubung hinzugefügt wird.

11. Verfahren gemäß dem Patentanspruch 9 oder 10, **dadurch gekennzeichnet, dass** die Biokohle vermischt mit dem Holzdestillat dem Mulch zur Bodenbedeckung (10) hinzugefügt wird.

12. Einsatz von Birkenholzdestillat zur Herstellung eines Mulch zur Bodenbedeckung (10), und/oder zur Aufrechterhaltung der Betriebsbedingungen während des landwirtschaftlichen Anbaus.

13. Einsatz von Birkenholzdestillat im Mulchmaterial zur Bodenbedeckung (11), oder bei der Herstellung von dem Mulchmaterial zur Bodenbedeckung (11).

14. Einsatz eines Mulch zur Bodenbedeckung (10) im landwirtschaftlichen Anbau gemäß einem der Patentansprüche 1 - 3.

## Revendications

1. Paillis couvre-sol, qui contient une pâte formée en nappe contenant des fibres végétales, et un distillat de bois, **caractérisé en ce que** le distillat de bois comprend du distillat de bois de bouleau.

2. Paillis couvre-sol selon la revendication 1, **caractérisé en ce que** le paillis couvre-sol (10) contient en outre du biochar.

3. Paillis couvre-sol selon la revendication 2, **caractérisé en ce que** le biochar est du carbone à grain fin fabriqué à partir de bois par pyrolyse.

4. Méthode pour fabriquer un paillis couvre-sol, où ledit paillis couvre-sol (10) est formé en nappe à partir d'une pâte contenant des fibres végétales, qui contient en outre au moins du distillat de bois, **caractérisée en ce que** le distillat de bois est du distillat de bois de bouleau.

5. Méthode selon la revendication 4, **caractérisée en ce que** le distillat de bois de bouleau est transféré dans le matériau de paillis (11) par pulvérisation.

6. Méthode selon la revendication 4 ou 5, **caractérisée en ce que** le distillat de bois de bouleau est transféré dans le matériau de paillis (11) par rouleau.

7. Méthode selon l'une quelconque des revendications 4 à 6, **caractérisée en ce que** le paillis couvre-sol (10) est saturé de distillat de bois de bouleau.

8. Méthode selon l'une quelconque des revendications 4 à 7, **caractérisée en ce que** le biochar est ajouté dans le paillis couvre-sol (10) au cours de sa phase de fabrication.

9. Méthode selon la revendication 8, **caractérisée en ce que** le biochar est ajouté dans le paillis couvre-sol (10) dans le cadre du traitement avec le distillat de bois.

10. Méthode selon la revendication 9, **caractérisée en ce que** le biochar est ajouté dans le paillis couvre-sol (10) par saupoudrage.

11. Méthode selon la revendication 9 ou 10, **caractérisée en ce que** le biochar est ajouté dans le paillis couvre-sol (10) mélangé avec le distillat de bois de bouleau.

12. Utilisation du distillat de bois de bouleau pour fabriquer un paillis couvre-sol (10) et/ou pour le maintenir en bon état pendant la culture.

13. Utilisation du distillat de bois de bouleau dans un matériau de paillis couvre-sol (11) ou dans la fabrication d'un matériau de paillis couvre-sol (11).

14. Utilisation d'un paillis couvre-sol (10) selon l'une quelconque des revendications 1 à 3 dans l'agriculture.
